# EUROPÄISCHE PATENTSCHRIFT

(11) **EP 1 926 641 B1**
(45) Veröffentlichungstag und Bekanntmachung des Hinweises auf die Patenterteilung: **12.09.2012**
(21) Anmeldenummer: 06778082.5
(22) Anmeldetag: 31.07.2006
(51) Int. Cl.: B60S 1/04

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
DISPOSITIF ESSUIE-GLACE, EN PARTICULIER POUR UN VEHICULE A MOTEUR

(30) Priorität: 09.09.2005 DE 102005042847
(43) Veröffentlichungstag der Anmeldung: 04.06.2008
(73) Patentinhaber: ROBERT BOSCH GMBH, 70442 Stuttgart (DE)
(72) Erfinder: BARLAS, Burak, 76534 Baden-Baden (DE)
(86) Internationale Anmeldenummer: PCT/EP2006/064857
(87) Internationale Veröffentlichungsnummer: WO 2007/028678

(56) Entgegenhaltungen:
- EP-A- 1 215 094
- EP-B1- 1 809 520
- DE-A1- 10 255 775
- FR-A- 2 850 922

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen, beispielsweise aus der DE-A-10255775, bekannt, die ein Wischerlager mit einem Lagergehäuse aufweisen, in dem eine Wischerwelle gelagert und mittels eines Elementes axial fixiert ist. Die Wischerwelle trägt an ihrem freien, ersten Ende einen Wischerarm, an dessen freien Ende ein Wischblatt befestigt werden kann. Die axiale Fixierung ist dabei derart ausgebildet, dass das Element bei einer Krafteinwirkung auf den Wischerarm bzw. auf das erste Ende der Wischerarmwelle unter Energieaufnahme verformt wird. Prallt daher bei einem Unfall ein Fußgänger auf die Wischerarme oder die Wischerwelle der Scheibenwischvorrichtung auf, so können diese zurückweichen, wodurch Verletzungen des Fußgängers vermieden oder zumindest reduziert werden. Dadurch, dass das Element Energie aufzunehmen vermag, wird darüber hinaus verhindert, dass der Fußgänger mit der gesamten Energie des Aufpralls auf die Fahrzeugkarosserie aufschlägt. Hierzu ist als Element zur axialen Fixierung eine Feder vorgesehen, die beim Aufprall eines Fußgängers auf das freie, erste Ende der Wischerwelle ein Zurückweichen der Wischerwelle ermöglicht und dabei Energie aus dem Aufprall aufnimmt. Um die Wischerwelle im Betrieb in einer stabilen Position zu halten, sind darüber hinaus Sollbruchelemente vorgesehen, die die Wischerwelle im Normalbetrieb axial stabilisieren. Eine derartige Ausbildung ist jedoch relativ aufwendig und kostenintensiv.

Aus der FR-A-2 850 922, der EP 1 809 520 B1 sowie aus der EP-A-1 215 094 sind Vorrichtungen mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass das Element als Brückenelement ausgebildet ist. Auf diese Weise kann die Kraft, die benötigt wird, um das Zurückweichen der Wischerwelle zu ermöglichen, genau dosiert werden und bleibt über die Lebensdauer der Scheibenwischvorrichtung konstant. Darüber hinaus ist eine derartige Ausbildung einfach und kostengünstig herzustellen.

Durch die in den Unteransprüchen aufgeführten Maßnahmen ergeben sich vorteilhafte Weiterbildungen und Verbesserungen der im Hauptanspruch angegebenen Merkmale.

Die Wischerwelle weist einen Ansatz auf und das Brückenelement first zwischen dem Lagergehäuse und dem Ansatz angeordnete, um eine stabile axiale Fixierung im Normalbetrieb zu ermöglichen.

In einer einfachen Ausführung ist der Ansatz im Wesentlichen scheibenförmig ausgebildet und umgreift die Wischerwelle.

Vorteilhafter Weise kann ein Bauteil eingespart werden, wenn der Ansatz einstückig mit der der Wischerwelle ausgebildet ist.

Das Brückenelement weist auch mindestens drei zur Wischerwelle koaxiale Ebenen auf, die durch Verbindungsstege verbunden sind. Hierbei ist es weiterhin vorteilhaft, wenn die Verbindungsstege schräg zur Wischerwelle verlaufen.

Besonders vorteilhaft ist es, wenn die Verbindungsstege parallel zur Wischerwelle angeordnet sind. Hierbei ist es weiterhin von Vorteil, wenn die Verbindungsstege sich bei einer Projektion auf eine zur Wischerwelle parallele Ebene nicht überlappen, um eine einfache und kostengünstige Möglichkeit der Fertigung des Brückenelementes zu ermöglichen.

In einer besonders wirkungsvollen Ausbildung der Scheibenwischvorrichtung weist das Brückenelement eine Sollbruchstelle auf.

Hierbei ist es von Vorteil, wenn die Sollbruchstelle in mindestens einer Ebene, insbesondere in einer der Mittelebenen, angeordnet ist.

Eine besonders wirkungsvolle Variante ist dadurch gegeben, dass jede Ebene durch mindestens drei, insbesondere vier, Verbindungsstege mit der jeweils angrenzenden Ebene verbunden ist und für jeden Verbindungssteg mindestens eine Sollbruchstelle in der angrenzenden, nicht randständigen Ebene vorgesehen ist, um ein leichtes Zurückweichen der Wischerwelle beim Aufprall eines Fußgängers zu ermöglichen.

In einer besonders einfachen Ausführungsform ist die Wischerwelle durch eine Antriebskurbel antreibbar, die einstückig mit dem Ansatz ausgebildet ist oder selbst als Ansatz dient.

Vorteilhafterweise ist das Brückenelement korrosionsgeschützt ausgeführt, insbesondere aus Kunststoff ausgebildet. Eine lange Lebensdauer und eine sichere Funktion wird dadurch erzielt, dass das Lagergehäuse, die Wischerwelle oder der Ansatz Sicherungsmittel aufweisen, die ein Verdrehen oder Verschieben des Brückenelementes verhindern.

Besonders einfach und kostengünstig kann das Brückenelement einstückig mit dem Lagergehäuse ausgebildet sein.

### Zeichnungen

Verschiedene Ausführungsbeispiele der Erfindung sind in den Zeichnungen dargestellt und in der nachfolgenden Beschreibung näher erläutert. Es zeigen:
- Figur 1: eine erfindungsgemäße Scheibenwischvorrichtung in einer perspektivischen Darstellung,
- Figur 2: das Wischerlager einer erfindungsgemäßen Scheibenwischvorrichtung in einer Seitenansicht,
- Figur 3: ein Brückenelement einer erfindungsgemäßen Scheibenwischvorrichtung in einer Seitenansicht,
- Figuren 4, 5 und 6: ein Brückenelement einer erfindungsgemäßen Scheibenwischvorrich-tung während eines Aufpralls,
- Figur 7: das Wischerlager aus Figur 2 nach einem Aufprall und
- Figur 8: ein Wischerlager einer erfindungsgemäßen Scheibenwischvorrichtung in einer Variation.

### Beschreibung des Ausführungsbeispiels

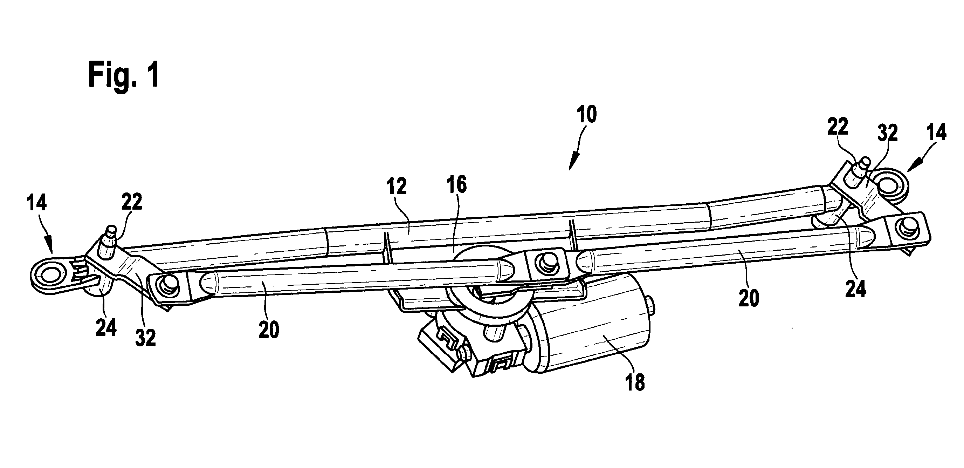

In Figur 1 ist eine erfindungsgemäße Scheibenwischvorrichtung 10 in einer perspektivischen Darstellung gezeigt. Diese umfasst im Wesentlichen ein Trägerrohr 12, welches an den Enden seiner Längserstreckung jeweils ein Wischerlager 14 trägt. Weiterhin ist am Trägerrohr 12 ein Motorträger 16 befestigt, der einen Wischermotor 18 trägt. Dieser Wischermotor 18 treibt über Schubstangen 20 Wischerwellen 22 an, die in den Lagergehäuse 24 der Wischerlager 14 gelagert sind. Hierzu ist die Schubstange 20 an eine Antriebskurbel 32 angelenkt, welche wiederum drehfest mit der Wischerwelle 22 verbunden ist.

Das Wischerlager 14 weist darüber hinaus noch ein Befestigungsauge 15 auf, welches auf der dem Trägerrohr abgewandten Seite des Wischerlagers angeordnet ist. In dem Befestigungsauge 15 sitzt eine Gummimuffe 17 zur Schwingungsdämpfung des Systems.

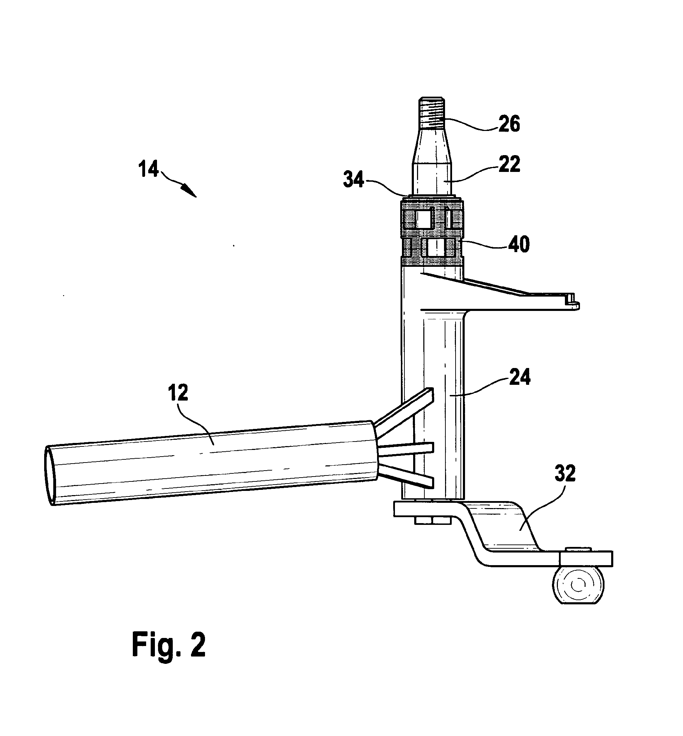

In Figur 2 ist ein Wischerlager 14 einer erfindungsgemäßen Scheibenwischvorrichtung 10 in einer perspektivischen Seitenansicht detailliert dargestellt. Die Wischerwelle 22 ist in einem im Wesentlichen rohrförmigen Lagergehäuse 24 des Wischerlagers 14 gelagert. Sie weist ein erstes Ende 26 auf, an dem sie mit einem, hier aus Gründen der Übersichtlichkeit nicht gezeigten, Wischerarm drehfest verbunden ist. Dieses erste Ende 26 besteht aus einem sich verjüngenden Abschnitt, der in einem Gewinde zum Abschluss der Wischerwelle 22 mündet. Drehfest mit der Wischerwelle 22 ist die Antriebskurbel 32 in dem Bereich der Wischerwelle 22 angeordnet, der entlang der Längserstreckung dem ersten Ende 26 der Wischerwelle 22 abgewandt ist. Diese Antriebskurbel 32 ist wiederum mit der Schubstange 20 (Figur 1) gelenkig verbunden. Weiterhin weist die Wischerwelle einen Ansatz 34 auf, der als Scheibe ausgebildet ist und axial auf der Wischerwelle 22 fixiert ist. In einer Variation kann der Ansatz 34 auch einstückig mit der Wischerwelle 22 ausgebildet sein oder durch die Antriebskurbel 32 selbst gebildet sein, wenn diese - wie in Figur 1 gezeigt - im Bereich des ersten Endes 26 der Wischerwelle 22 angeordnet ist. In einer weiteren Variation ist es möglich, dass der Ansatz 34 als radial und axial bewegliche Scheibe ausgebildet ist, deren axiale Beweglichkeit durch die Antriebskurbel 32 begrenzt wird. Grundsätzlich kann der Ansatz 34 aber auch aus einer zumindest teilweise ringförmigen Aussparung oder einer Öffnung bestehen, in die ein Sprengring bzw. ein Stift oder Bolzen oder beliebiges anderes Halteelement eingesetzt ist.

Die Wischerwelle 22 ragt aus einer Stirnseite des Lagergehäuses 24, die dem ersten Ende 26 zugewandt ist, heraus. Zwischen dem Ansatz 34 und der Stirnseite des Lagergehäuses 24 ist ein Brückenelement als Element 40 aufgesteckt. Zur Abstützung des Elementes 40 kann auf der Stirnseite des Lagergehäuses auch noch eine Metall- oder Kunststoffscheibe als Anlaufscheibe angeordnet sein.

Auf der Stirnseite des Lagergehäuses 24, die dem Brückenelement 40 abgewandt ist, ist die Antriebskurbel 32 drehfest mit der Wischerwelle 22 verbunden. Die Antriebskurbel 32 liegt hierbei direkt auf der Stirnseite des Lagergehäuses 24 an, sodass die Wischerwelle durch den Ansatz 34 und die Antriebskurbel 32 axial fixiert ist. Zwischen der dem Brückenelement 40 abgewandten Stirnseite des Lagergehäuses 24 und der Antriebskurbel 32 können auch noch eine oder mehrere Anlaufscheiben vorgesehen sein.

Ist - wie in Figur 1 gezeigt - die Antriebskurbel 32 im Bereich des ersten Endes 26 der Wischerwelle 22 angeordnet, so kann zur axialen Fixierung an dem dem ersten Ende 26 abgewandten Ende der Wischerwelle 22, auch ein spezielles Fixierungselement vorgesehen sein. Insbesondere kann dann die Antriebskurbel 32 den Ansatz 34 ersetzen.

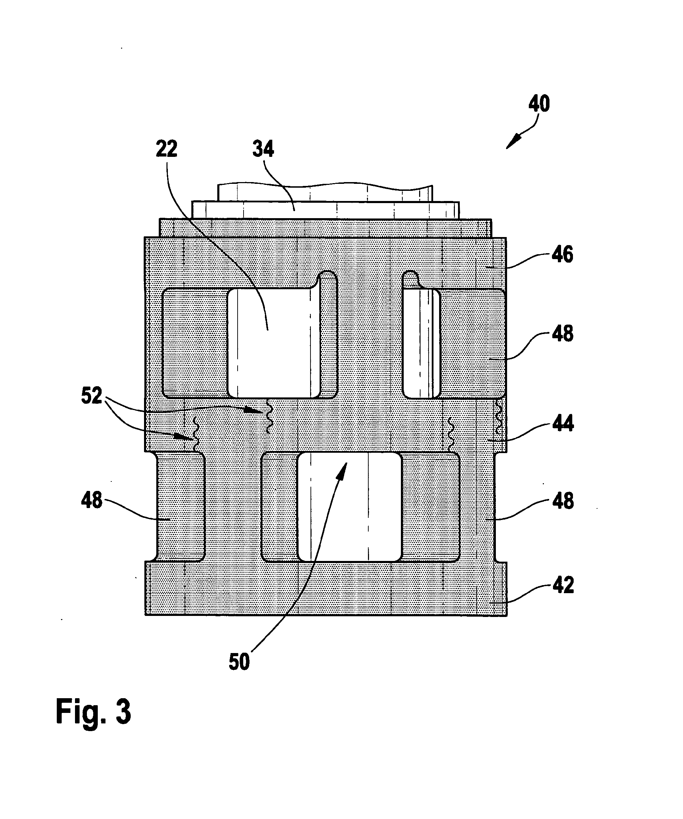

In Figur 3 ist das Brückenelement 40 mit einem Abschnitt der Wischerwelle 22 und dem Ansatz 34 in einer Seitenansicht en detail dargestellt. Das Brückenelement 40 umfasst im Wesentlichen drei Ebenen (42, 44, 46), die im Wesentlichen kreisringförmig ausgebildet sind und sich in montiertem Zustand um die Wischerwelle 22 schmiegen. Zwischen der ersten, in montiertem Zustand an der Stirnseite des Lagergehäuses 24 (Figur 2) anliegenden bodenseitigen Ebene 42 und der benachbarten, angrenzenden Mittelebene 44 sind Verbindungsstege 48 angeordnet, die sich senkrecht aus der bodenseitigen Ebene 42 heraus, parallel zur Wischerwelle 22, erstrecken und von im Wesentlichen quaderförmiger Gestalt sind. Diese Verbindungsstege 48 tragen die Mittelebene 44. Versetzt zu den Verbindungsstegen, die sich von der bodenseitigen Ebene 42 aus erstrecken, sind an der Mittelebene 44 weitere Verbindungsstege 48 angeordnet. Diese sind ebenfalls von im Wesentlichen quaderförmiger Gestalt und derart angeordnet, dass sie zu den Verbindungsstegen 48, die sich von der bodenseitigen Ebene 42 aus erstrecken, versetzt angeordnet sind. Dies hat zur Folge, dass bei einer Projektion der Verbindungsstege 48 in eine zur Wischerwelle 22 senkrechte Ebene sich die einzelnen Verbindungsstege 48 nicht überlappen. Die weiteren Verbindungsstege 48, die sich von der Mittelebene 44, in die der bodenseitigen Ebene 42 abgewandte Richtung erstrecken, also sich in Richtung des freien Endes 26 der Wischerwelle 22 erstrecken, tragen an ihrem der Mittelebene 44 abgewandten Ende die Deckebene 46, die den Abschluss des Brückenelementes 40 bildet.

In der Mittelebene 44 ergibt sich damit zwischen jeweils zwei von der bodenseitigen Ebene 42 ausgehenden Verbindungsstegen 48 ein Brückenbereich 50. Von diesem aus erstreckt sich ein Verbindungssteg 48 von der Mittelebene 44 zur Deckebene 46 hin. In den Bereichen der Mittelebene 44, auf denen diese nicht durch die Verbindungsstege 48 abgestützt ist und sich auch keine Verbindungsstege 48 zum Tragen der Deckfläche 46 befinden, sind Sollbruchstellen 52 angeordnet, die beispielsweise durch eine Verjüngung, bzw. Verringerung des Widerstandsquerschnitts der Mittelebene 44, beispielsweise durch einen Einschnitt, gebildet sind.

Allgemeiner formuliert ist somit jede Ebene 42, 44, 46 durch Verbindungsstege 48 mit der jeweils angrenzenden Ebene 42, 44, 46 verbunden. Für jeden Verbindungssteg 48 ist mindestens eine Sollbruchstelle 52 in der angrenzenden Ebene 44, vorgesehen, sofern diese nicht die bodenseitige Ebene 42 oder die Deckebene 46 bildet, also keine randständige Ebene 42, 46 bildet. Damit sind auf allen Mittelebenen 44 genau so viele Sollbruchstellen 52 angeordnet, wie Verbindungsstege 48 von ihr ausgehen.

Auf der Deckebene 46 kommt der Ansatz 34 zu liegen, sodass die Wischerwelle 22 axial gegen ein Verschieben nach unten abgestützt ist.

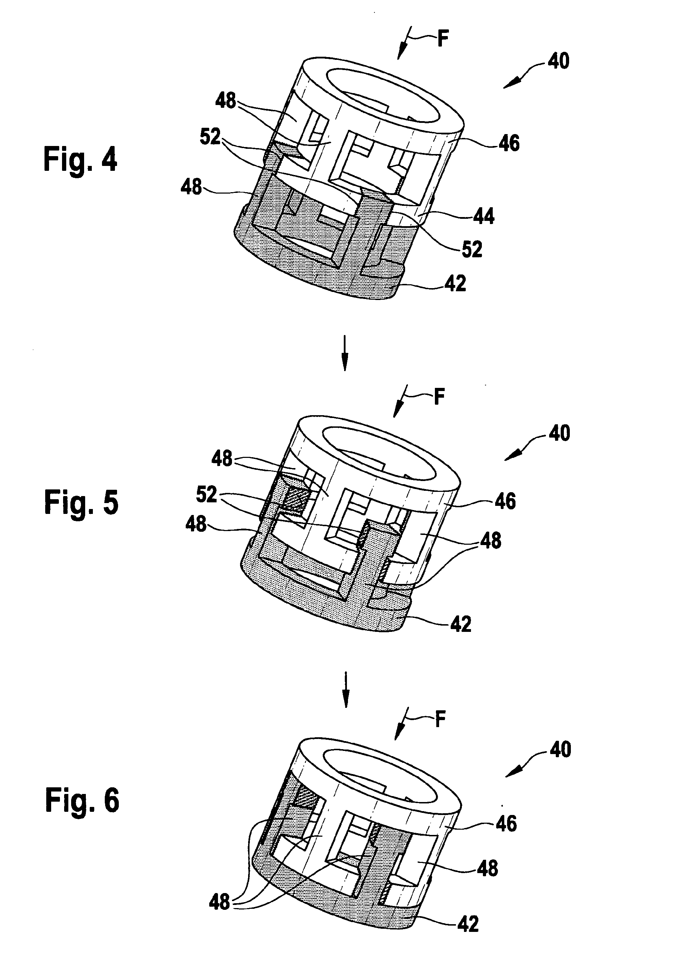

In den Figuren 4, 5 und 6 ist das Brückenelement 40 während eines Kraftstoßes F, wie dieser bei einem auf das freie Ende 26 der Wischerwelle 22 aufprallenden Fußgänger auftreten kann, gezeigt. Die Bezugsziffern sind hier identisch wie in Figur 3 gewählt. Das Brückenelement 40 weist vier Verbindungsstege 48 zwischen jeweils zwei angrenzenden Ebenen 42, 44, 46 auf. Weiterhin sind hier acht Sollbruchstellen 52 in der Mittelebene 44 vorgesehen, die sich jeweils zwischen zweien der acht Verbindungsstege 48 befinden. Die beiden randständigen Ebenen 42, 46 weisen keine Sollbruchstellen 52 auf. Auf diese Weise kann sich die obere Deckebene 46 mitsamt den sich von ihr aus erstreckenden Verbindungsstegen 48 in Richtung der Bodenebene 42 bewegen, wenn die Sollbruchstellen 52 brechen. Die Verbindungsstege 48, die mit der Deckebene 46 verbunden sind, gleiten dann zwischen den Verbindungsstegen 48, die mit der Bodenebene 42 verbunden sind, nach unten, wodurch sich die Gesamthöhe des Brückenelementes 40 wesentlich reduziert. Da die Deckebene 46 die Anlagefläche für den Ansatz 34, der axial fixiert mit der Wischerwelle 22 verbunden ist, bildet, kann das erste Ende 26 der Wischerwelle 22 auf diese Weise nach unten gleiten oder anders formuliert, durch einen Kraftstoß, drückt die Deckebene 46 mit den Verbindungsstegen 48 auf die Mittelebene 44, wodurch die Sollbruchstellen 52 brechen. Die Deckebene 46 gleitet mit den sich von ihr aus erstreckenden Verbindungsstegen 48 nach unten und zwar so, daß die Verbindungsstege 48 die sich von der bodenseitigen Ebene 42 aus erstrecken, kronenartig mit den Verbindungsstegen 48 die sich von der Deckebene 46 aus erstrecken ineinandergreifen. Somit gleitet das erste Ende 26 der Wischerwelle 22 beim Einwirken einer Kraft F, die größer ist als eine vorbestimmte Kraft, nach unten, wodurch die Verletzungsgefahr für einen Fußgänger reduziert wird. Die Mittelebene 44 wird dabei zerstört.

Nach einem derartigen Aufprall müssen auf diese Weise nur die Brückenelemente 40 der Scheibenwischvorrichtung 10 ausgetauscht werden.

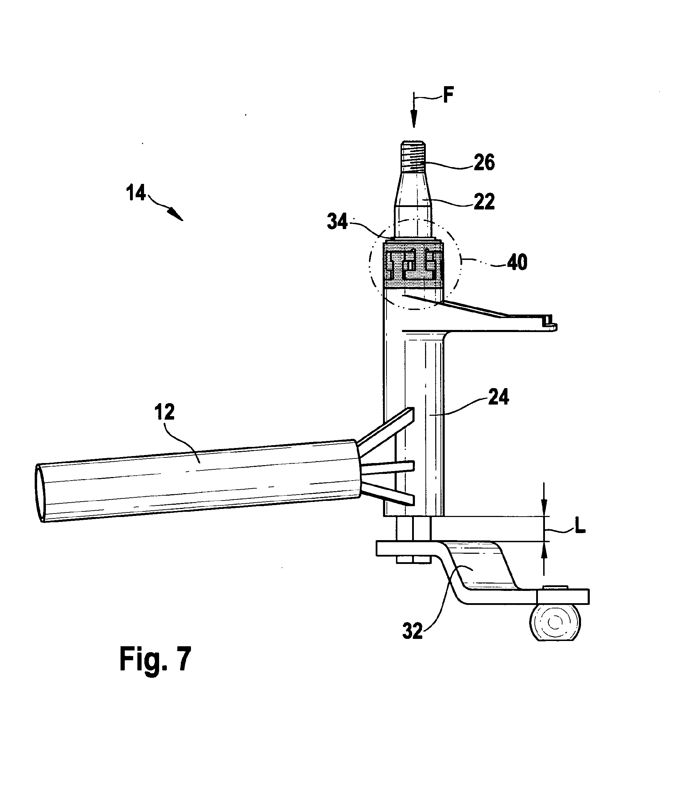

In Figur 7 ist das Wischerlager 14 aus Figur 2 nach einer Krafteinwirkung F gezeigt. Das Brückenelement 40 ist durch das Zurückweichen des ersten Endes 26 der Wischerwelle 22 mit dem Ansatz 34 zusammengedrückt. Die Mittelebene 44 ist zerstört. Die Wischerwelle 22 ist innerhalb des Lagergehäuses 24 nach unten geglitten, sodass sich eine Lücke L zwischen der dem ersten Ende 26 der Wischerwelle 22 abgewandten Stirnseite des Lagergehäuses 24 und der Antriebskurbel 32 ergibt. Die Wischerwelle 22 ist damit innerhalb des Lagergehäuses 24 nach unten geglitten.

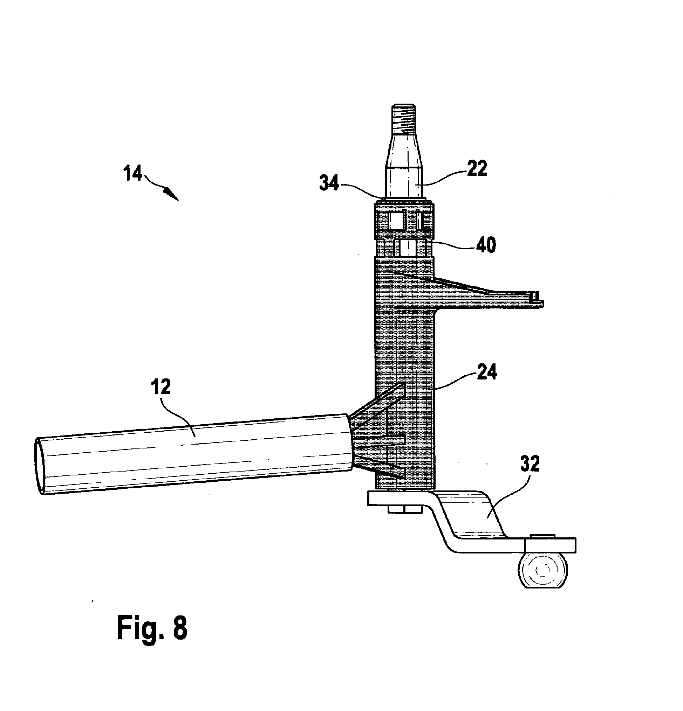

In Figur 8 ist eine Variation der Erfindung dargestellt. Das Brückenelement 40 ist einstückig mit dem Lagergehäuse 24 ausgebildet. Damit bildet die Stirnseite des Wischerlagers 24 selbst die Bodenebene 42 des Brückenelementes 40.

Das Brückenelement 40 ist einstückig aus Kunststoff hergestellt. Natürlich ist auch eine Herstellung aus Metall oder Keramik möglich und wird entsprechend den erforderlichen Kräften und Kraftverlaufsprofilen vom Fachmann festgelegt. Das Lagergehäuse 24 kann ebenfalls aus Kunststoff ausgebildet sein. Genauso wie beim Brückenelement 40 ist auch beim Lagergehäuse 24 eine Ausbildung als Spritzgussteil - auch in einem mehrkomponentigen Spritzgußverfahren - möglich. Auch ein entsprechendes Druckgussverfahren kommt, insbesondere bei einer Ausbildung aus Metall, in Betracht.

Um ein Verdrehen des Brückenelementes 40 während des Betriebs zu verhindern, können auch Sicherungsmittel, beispielsweise eine Nocke oder ein Stift mit einer jeweils korrespondierenden Aussparung im Lagergehäuse 24 bzw. im Brückenelement 40 vorgesehen sein. Diese müssen so angeordnet sein, dass das kronenartige Verschieben der Deckfläche 46 mit den Verbindungsstegen 48 durch die Krafteinwirkung F nicht behindert ist.

## Patentansprüche

1. Scheibenwischvorrichtung (10), insbesondere für ein Kraftfahrzeug, mit mindestens einem Wischerlager 814), welches ein Lagergehäuse (24) umfasst, einer Wischerwelle (22), die im Lagergehäuse (24) gelagert ist und an einem ersten Ende (26) einen Wischerarm zu tragen vermag, und einem Element (40), das die Wischerwelle (22) axial abstützt, wobei das Element (40) als Brückenelement ausgebildet ist, **dadurch gekennzeichnet, dass** die Wischerwelle (22) einen Ansatz (34) aufweist und das Brückenelement (40) zwischen dem Lagergehäuse (24) und dem Ansatz (34) angeordnet ist, wobei das Brückenelement (40) mindestens drei zur Wischerwelle koaxiale Ebenen (42, 44, 46) aufweist, die durch Verbindungsstege (48) verbunden sind.

2. Scheibenwischvorrichtung (10) nach Anspruch 1, **dadurch gekennzeichnet, dass** der Ansatz (34) im wesentlichen scheibenförmig ausgebildet ist und die Wischerwelle im wesentlichen umgreift.

3. Scheibenwischvorrichtung (10) nach Anspruch 1 oder 2, **dadurch gekennzeichnet, dass** der Ansatz (34) einstückig mit der Wischerwelle (22) ausgebildet ist.

4. Scheibenwischvorrichtung (10) nach Anspruch 1, **dadurch gekennzeichnet, dass** die Verbindungsstege (48) schräg zur Wischerwelle (22) verlaufen.

5. Scheibenwischvorrichtung (10) nach Anspruch 1, **dadurch gekennzeichnet, dass** die Verbindungsstege (48) parallel zur Wischerwelle (22) angeordnet sind.

6. Scheibenwischvorrichtung (10) nach Anspruch 5, **dadurch gekennzeichnet, dass** die Verbindungsstege (48) sich bei einer Projektion auf eine zur Wischerwelle parallele Ebene nicht überlappen.

7. Scheibenwischvorrichtung (10) nach einem der vorhergehenden Ansprüche, **dadurch gekennzeichnet, dass** das Brückenelement (40) mindestens eine Sollbruchstelle (52) aufweist.

8. Scheibenwischvorrichtung (10) nach Anspruch 7, **dadurch gekennzeichnet, dass** die mindestens eine Sollbruchstelle (52) in mindestens einer Ebene (42, 44, 46), insbesondere einer der Mittelebenen (44), vorgesehen ist.

9. Scheibenwischvorrichtung (10) nach einem der Ansprüche 1 oder 4 bis 8, **dadurch gekennzeichnet, dass** jede Ebene (42, 44, 46) durch mindestens drei, insbesondere vier Verbindungsstege (48) mit der jeweils angrenzenden Ebene (42, 44, 46) verbunden ist und für jeden Verbindungssteg (48) mindestens eine Sollbruchstelle (52) in der angrenzenden, nicht randständigen Ebene (42, 46) vorgesehen ist.

10. Scheibenwischvorrichtung (10) nach einem der vorhergehenden Ansprüche, **dadurch gekennzeichnet, dass** die Wischerwelle (22) durch eine Antriebskurbel (32) antreibbar ist, die einstückig mit dem Ansatz (34) ausgebildet ist oder selbst als Ansatz (34) dient.

11. Scheibenwischvorrichtung (10) nach einem der vorhergehenden Ansprüche, **dadurch gekennzeichnet, dass** das Brückenelement (40) korrosionsgeschützt, insbesondere aus Kunststoff ausgebildet ist.

12. Scheibenwischvorrichtung (10) nach einem der vorhergehenden Ansprüche, **dadurch gekennzeichnet, dass** das Lagergehäuse (24), die Wischerwelle (22) oder der Ansatz (34) Sicherungsmittel (37) gegen ein Verdrehen und/oder Verschieben des Brückenelementes (40) aufweist.

13. Scheibenwischvorrichtung (10) nach einem der vorhergehenden Ansprüche, **dadurch gekennzeichnet, dass** das Brückenelement (40) einstückig mit dem Lagergehäuse ausgebildet ist.

## Claims

1. Windscreen wiper device (10), in particular for a motor vehicle, with at least one wiper bearing (14), which comprises a bearing housing (24), a wiper shaft (22) which is mounted in the bearing housing (24) and is capable of bearing a wiper arm at a first end (26), and an element (40) which supports the wiper shaft (22) axially, wherein the element (40) is designed as a bridge element, **characterized in that** the wiper shaft (22) has a collar (34), and the bridge element (40) is arranged between the bearing housing (24) and the collar (34), wherein the bridge element (40) has at least three planes (42, 44, 46) which are coaxial to the wiper shaft and are connected by connecting webs (48).

2. Windscreen wiper device (10) according to Claim 1, **characterized in that** the collar (34) is of substantially disc-shaped design and substantially engages around the wiper shaft.

3. Windscreen wiper device (10) according to Claim 1 or 2, **characterized in that** the collar (34) is formed integrally with the wiper shaft (22).

4. Windscreen wiper device (10) according to Claim 1, **characterized in that** the connecting webs (48) run obliquely to the wiper shaft (22).

5. Windscreen wiper device (10) according to Claim 1, **characterized in that** the connecting webs (48) are arranged parallel to the wiper shaft (22).

6. Windscreen wiper device (10) according to Claim 5, **characterized in that** the connecting webs (48) do not overlap in a projection onto a plane parallel to the wiper shaft.

7. Windscreen wiper device (10) according to one of the preceding claims, **characterized in that** the bridge element (40) has at least one predetermined breaking point (52).

8. Windscreen wiper device (10) according to Claim 7, **characterized in that** the at least one predetermined breaking point (52) is provided in at least one plane (42, 44, 46) , in particular in one of the centre planes (44).

9. Windscreen wiper device (10) according to one of Claims 1 and 4 to 8, **characterized in that** each plane (42, 44, 46) is connected to the respectively adjacent plane (42, 44, 46) by at least three, in particular four, connecting webs (48), and, for each connecting web (48), at least one predetermined breaking point (52) is provided in the adjacent, non-marginal plane (42, 46).

10. Windscreen wiper device (10) according to one of the preceding claims, **characterized in that** the wiper shaft (22) is drivable by a driving crank (32) which is formed integrally with the collar (34) or itself serves as the collar (34).

11. Windscreen wiper device (10) according to one of the preceding claims, **characterized in that** the bridge element (40) is corrosion-protected, in particular is formed from plastic.

12. Windscreen wiper device (10) according to one of the preceding claims, **characterized in that** the bearing housing (24), the wiper shaft (22) or the collar (34) has securing means (37) against rotation and/or displacement of the bridge element (40).

13. Windscreen wiper device (10) according to one of the preceding claims, **characterized in that** the bridge element (40) is formed integrally with the bearing housing.

## Revendications

1. Dispositif d'essuie-glace (10), en particulier pour un véhicule automobile, comprenant au moins un palier d'essuie-glace (14) qui comprend un boîtier de palier (24), un arbre d'essuie-glace (22) qui est monté dans le boîtier de palier (24) et qui permet de porter à une première extrémité (26) un bras d'essuie-glace, et un élément (40) qui supporte axialement l'arbre d'essuie-glace (22), l'élément (40) étant réalisé sous forme d'élément de pont, **caractérisé en ce que** l'arbre d'essuie-glace (22) présente un bout (34) et l'élément de pont (40) est disposé entre le boîtier de palier (24) et le bout (34), l'élément de pont (40) présentant au moins trois plans (42, 44, 46) coaxiaux par rapport à l'arbre d'essuie-glace, qui sont reliés par des nervures de connexion (48).

2. Dispositif d'essuie-glace (10) selon la revendication 1, **caractérisé en ce que** le bout (34) est réalisé essentiellement en forme de disque et vient en prise sensiblement autour de l'arbre d'essuie-glace.

3. Dispositif d'essuie-glace (10) selon la revendication 1 ou 2, **caractérisé en ce que** le bout (34) est réalisé d'une seule pièce avec l'arbre d'essuie-glace (22).

4. Dispositif d'essuie-glace (10) selon la revendication 1, **caractérisé en ce que** les nervures de connexion (48) s'étendent obliquement par rapport à l'arbre d'essuie-glace (22).

5. Dispositif d'essuie-glace (10) selon la revendication 1, **caractérisé en ce que** les nervures de connexion (48) sont disposées parallèlement à l'arbre d'essuie-glace (22).

6. Dispositif d'essuie-glace (10) selon la revendication 5, **caractérisé en ce que** les nervures de connexion (48) ne se chevauchent pas en projection sur un plan parallèle à l'arbre d'essuie-glace.

7. Dispositif d'essuie-glace (10) selon l'une quelconque des revendications précédentes, **caractérisé en ce que** l'élément de pont (40) présente au moins une zone de rupture (52).

8. Dispositif d'essuie-glace (10) selon la revendication 7, **caractérisé en ce que** l'au moins une zone de rupture (52) est prévue dans au moins un plan (42, 44, 46), notamment l'un des plans médians (44).

9. Dispositif d'essuie-glace (10) selon l'une quelconque des revendications 1 ou 4 à 8, **caractérisé en ce que** chaque plan (42, 44, 46) est connecté par le biais d'au moins trois, notamment quatre, nervures de connexion (48) au plan adjacent respectif (42, 44, 46), et pour chaque nervure de connexion (48) est prévu au moins une zone de rupture (52) dans le plan adjacent, non marginal (42, 46).

10. Dispositif d'essuie-glace (10) selon l'une quelconque des revendications précédentes, **caractérisé en ce que** l'arbre d'essuie-glace (22) peut être entraîné par une manivelle d'entraînement (32) qui est réalisée d'une seule pièce avec le bout (34) ou qui sert elle-même de bout (34).

11. Dispositif d'essuie-glace (10) selon l'une quelconque des revendications précédentes, **caractérisé en ce que** l'élément de pont (40) est réalisé de manière anticorrosion, notamment en plastique.

12. Dispositif d'essuie-glace (10) selon l'une quelconque des revendications précédentes, **caractérisé en ce que** le boîtier de palier (24), l'arbre d'essuie-glace (22) ou le bout (34) présente des moyens de fixation (37) contre une rotation et/ou un coulissement de l'élément de pont (40).

13. Dispositif d'essuie-glace (10) selon l'une quelconque des revendications précédentes, **caractérisé en ce que** l'élément de pont (40) est réalisé d'une seule pièce avec le boîtier de palier.
